# EUROPEAN PATENT APPLICATION

(11) **EP 3 113 348 A2**
(43) Date of publication of application: **04.01.2017**
(21) Application number: 15178647.2
(22) Date of filing: 28.07.2015
(51) Int. Cl.: H02M 3/335, H02M 1/00

(54) **AN ISOLATED CONVERTER**

(30) Priority: 29.06.2015 PL 41289415
(71) Applicant: Akademia Gorniczo-Hutnicza im. Stanislawa Staszica w Krakowie, 30-059 Krakow (PL)
(72) Inventor: Worek, Cezary, 30-240 Krakow (PL)
(74) Representative: Eupatent.pl

(57) **Abstract**

An isolated DC-DC converter configured to convert a DC input voltage into a DC output voltage, comprising an inverter configured to convert the DC input voltage into an alternating voltage, a shaping circuit configured to shape the alternating voltage and a rectifying circuit configured to rectify the shaped alternating voltage into the DC output voltage. The shaping circuit comprises an isolation module (IM), the isolation module (IM) comprising: a magnetic input circuit (MC1) comprising an input ferromagnetic core-piece (121, 131) on which there is wound an input winding (111) connected to the shaped alternating voltage; a magnetic output circuit (MC2) comprising an output ferromagnetic core-piece (123, 133) on which there is wound an output winding (113) connected to the rectifying circuit, wherein the output ferromagnetic core-piece (123, 133) is electrically isolated from the input ferromagnetic core-piece (121, 131); wherein the magnetic input circuit (MC1) is coupled with the magnetic output circuit (MC2) by a coupling winding (112) wound on the input ferromagnetic core-piece (121, 131) and on the output ferromagnetic core-piece (123, 133), wherein the distances (d1-d6) between the coupling winding (112) and the input winding (111), input ferromagnetic core-piece (121, 131), the output ferromagnetic core-piece (123, 133) and the output winding (113) are not smaller than the isolation distance; and wherein the coefficient of coupling k between the input winding (111) and the output winding (113) is less than 0.75.

## Description

### TECHNICAL FIELD

The present invention relates to an isolated converter.

### BACKGROUND

Isolated DC-DC converters providing a high insulation level and resistance to dielectric breakdown voltage (up to over tens of kilovolts), are extensively employed in measuring systems, in gate driver circuits of transistors operated at a high potentials in inverters, and in systems where galvanic isolation is required for human and/or machinery safety reasons. Their areas of application include operation in spaces exposed to explosion hazard, medicine, avionics, industrial electronics etc.

US patent applications US20100026095 and US20110278927 disclose multiple-output isolated DC-DC converters comprising transformers, to which there are connected output stages, as well as the output voltage control method preventing the output voltage from increasing when the output voltage reaches the threshold value. These solutions utilise controlled output rectifiers, what makes the system considerably complicated and, consequently, its practical application is limited to converters with large output powers. Moreover, since the output transformer utilizes a single core and has a classic structure, it is difficult to achieve a high insulation level, high resistance to dielectric breakdown voltage and small parasitic capacitances between the converter input and output.

A US patent US6373736 discloses an isolated converter comprising a planar transformer comprising a multilayer circuit board having a primary coil and a secondary coil arranged coaxially on both sides of the board, and comprising a core-piece placed within these coils. Although the planar output transformer enables high level of integration, it is difficult to achieve in it a high level of insulation, high resistance to dielectric breakdown voltage and small parasitic capacitances between the converter input and output.

A US patent application US20040179383 discloses an isolated converter with multiple outputs, comprising a semiconductor integrated circuit formed on a semiconductor substrate, a thin film magnetic component and a capacitor. A drawback of that solution is that in practice it can only be used in integrated circuits and, due to small isolation distances, its resistance to dielectric breakdown voltage is low.

A US patent application US20130300210 discloses a resonant power transfer system comprising a capacitor connected in series with a power transmission coil and a power reception unit including a capacitor connected in series with a power reception coil. A drawback of that solution is its considerable complexity, which practically excludes its application to low power systems.

A US patent application US20140177291 discloses a self-excited push-pull converter, which comprises a Royer circuit, wherein an inductor is further connected between a supply terminal of said Royer circuit and a center tap of primary windings of a transformer in said Royer circuit, wherein an inductance amount of said inductor is less than 1/10 of the inductance amount of one of the primary windings of the transformer. It is dedicated for low-power systems, but since its output transformer utilizes a single core and has a classic structure, it is therefore difficult to achieve a high insulation level, high resistance to dielectric breakdown voltage and small parasitic capacitances between the converter input and output. Moreover, due to the self-excited mode of operation, the converter exhibits high electromagnetic interference emission level.

A US patent application US20140354384 discloses a magnetic transformer core, which includes a closed ring with a thick part and a thin part. The thin part is magnetically saturated before the thick part when excited by the same increasing magnetic fields. This solution has drawbacks similar to those of the aforementioned solution, although its energy efficiency has been improved over a wider range of load changes.

A US patent US5442534 discloses a converter comprising two separate non-isolated feedback loops, one on the primary side to regulate against input voltage changes and the other on the secondary side to regulate against load current changes only. This solution utilizes decoupled control circuits on the primary and secondary side - this considerably increases the system complexity and, consequently, limits its practical use is to large output power applications. Additionally, since the output transformer utilizes a single core and has a classic structure, it is difficult to achieve a high insulation level, high resistance to dielectric breakdown voltage and small parasitic capacitances between the converter input and output.

The known structures of isolated converters require further improvements. In particular, there is a need to develop an isolated converter ensuring high insulation level, high resistance to dielectric breakdown voltage, and small coupling capacitances between the input and respective outputs and also between these outputs. Furthermore, there is a need to achieve converter operation with no feedback loop from output circuits, i.e. without the galvanic isolation block, particularly for low-power converters, in order to reduce the converter manufacturing cost and ensure low emission of electromagnetic interference.

### SUMMARY

The object of the present invention is an isolated DC-DC converter configured to convert a DC input voltage into a DC output voltage, comprising an inverter configured to convert the DC input voltage into an alternating voltage, a shaping circuit configured to shape the alternating voltage and a rectifying circuit configured to rectify the shaped alternating voltage into the DC output voltage. The shaping circuit comprises an isolation module, wherein the isolation module comprises: a magnetic input circuit comprising an input ferromagnetic core-piece on which there is wound an input winding connected to the shaped alternating voltage; a magnetic output circuit comprising an output ferromagnetic core-piece on which there is wound an output winding connected to the rectifying circuit, wherein the output ferromagnetic core-piece is electrically isolated from the input ferromagnetic core-piece. The magnetic input circuit is coupled with the magnetic output circuit by a coupling winding wound on the input ferromagnetic core-piece and on the output ferromagnetic core-piece, wherein the distances between the coupling winding and the input winding, input ferromagnetic core-piece, the output ferromagnetic core-piece and the output winding are not smaller than the isolation distance. The coefficient of coupling k between the input winding and the output winding is less than 0.75.

Preferably, the isolation module further comprises at least one additional output magnetic circuit comprising an additional ferromagnetic core piece on which there is wound an additional output winding, connected to additional output terminals of the converter, wherein the additional ferromagnetic core piece is electrically isolated from the input core-piece, and wherein the input magnetic circuit is coupled with the additional output magnetic circuit by means of an additional coupling winding which is wound on the additional input ferromagnetic core-piece and on the output magnetic core-piece, wherein the distances between the additional coupling winding and the input winding, the input ferromagnetic core-piece, the additional output ferromagnetic core-piece and the additional output winding are not smaller than the isolation distance.

Preferably, the converter is a multiple-output converter comprising at least one additional isolation module connected in series with the first isolation module.

Preferably, the input ferromagnetic core-piece and/or at least one output ferromagnetic core-piece comprises a gap.

Preferably, the coupling coefficient k between the input winding and the output winding is less than 0.4.

Preferably, a resonant capacitor is connected in parallel to the output winding.

Preferably, the converter is a push-pull type converter wherein the isolation module is connected in a diagonal of a half-bridge comprising a pair of transistor switches connected to gate driver outputs of a controller.

Preferably, the converter is a flyback converter wherein one input of the isolation module is connected to one of the input voltage terminals and the other input of the isolation module is connected through a transistor switch to another terminal of the input voltage, wherein the transistor switch is connected to a controller gate driver output.

Preferably, the converter is a half-bridge resonant converter, wherein the isolation module is an inductive reactance element of a series resonant circuit comprising capacitors and as capacitive elements, wherein the isolation module is connected in the diagonal of a half-bridge comprising a pair of transistor switches, and wherein the converter further comprises a controller having gate driver outputs connected to transistor switches.

Preferably, the converter is a half-bridge resonant converter with a series-parallel resonant circuit, wherein in the diagonal of a half-bridge comprising a pair of transistor switches there is connected the first isolation module being a series inductive reactance element of a series-parallel resonant circuit comprising capacitors and as capacitive elements, wherein the additional isolation module is connected in series with the first isolation module, forming an inductive reactance element of a parallel resonant circuit comprising a capacitor as a capacitive element, and wherein the converter further comprises a controller having gate driver outputs connected to transistor switches.

Preferably, the converter is a half-bridge resonant converter, wherein an impedance matching network for matching the isolation module is connected to an inverter, comprising an assembly of transistor switches, and to an isolation module, wherein the isolation module outputs are connected to additional impedance matching networks, which are configured to match the isolation module outputs to loads, and wherein the converter comprises a controller having gate driver outputs connected to transistor switches.

Preferably, the converter is a resonant converter, wherein an impedance matching network for matching the isolation module is connected to a class E inverter comprising a transistor switch, an inductor and a capacitive element and to the isolation module, wherein the isolation module outputs are connected to additional impedance matching networks, which are configured to match the isolation module outputs to load, wherein the converter comprises a controller having a gate driver output connected the transistor switch.

The solution according to the present invention provides high level of insulation, high resistance to dielectric breakdown voltage and small coupling capacitances between the input and respective outputs and also between these outputs. Furthermore, it provides the option of converter operation with no feedback loop from output circuits, i.e. without the galvanic isolation block (IB). Consequently, the feedback loop stabilizes the converter operation utilizing signals from one of or both blocks for current sensing (CS) or voltage sensing (VS), thus allows avoiding the use, particularly for high voltages, of expensive galvanic isolation block (IB) and enables to achieve extremely small coupling capacitances between the converter input and output.

### BRIEF DESCRIPTION OF FIGURES

The present invention is shown by means of exemplary embodiments in a drawing in which:
Fig. 1 shows a first exemplary embodiment of the isolation module;
Fig. 2 shows a second exemplary embodiment of the isolation module;
Fig. 3 shows a third exemplary embodiment of the isolation module;
Fig. 4 shows a fourth exemplary embodiment of the isolation module;
Fig. 5 shows a fifth exemplary embodiment of the isolation module;
Fig. 6 shows a sixth exemplary embodiment of the isolation module;
Fig. 7 shows a seventh exemplary embodiment of the isolation module;
Fig. 8 shows an eighth exemplary embodiment of the isolation module;
Fig. 9 shows a first exemplary embodiment of the single-output isolated converter;
Fig. 10 shows a second exemplary embodiment of the single-output isolated converter;
Fig. 11 shows a third exemplary embodiment of the single-output isolated converter;
Fig. 12 shows a first exemplary embodiment of the multiple-output isolated converter;
Fig. 13 shows a second exemplary embodiment of the multiple-output isolated converter;
Fig. 14 shows a third exemplary embodiment of the multiple-output isolated converter;
Fig. 15 shows a fourth exemplary embodiment of the multiple-output isolated converter.

### DETAILED DESCRIPTION

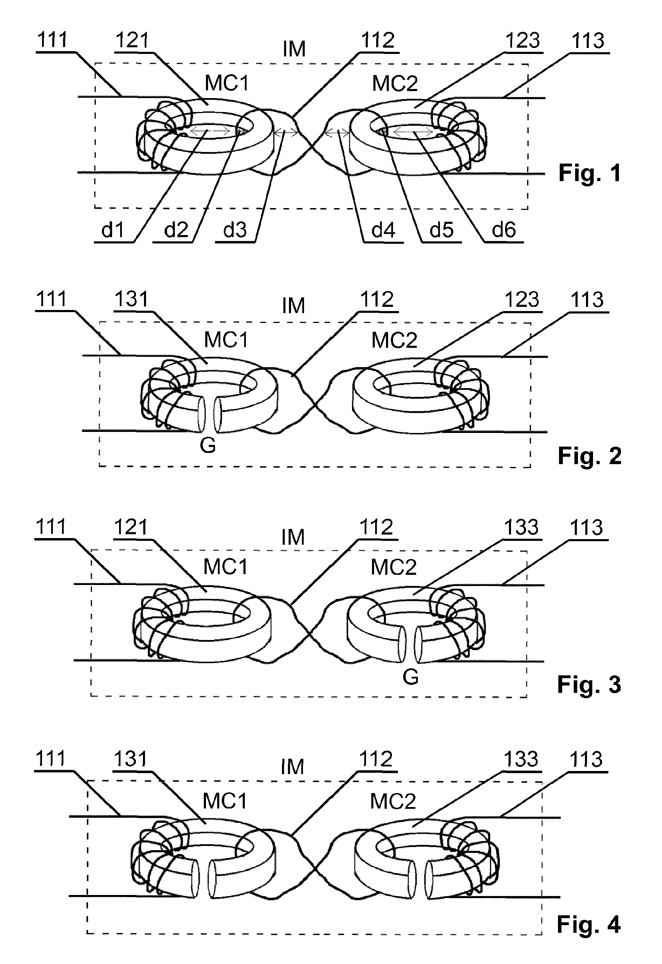

Fig. 1 shows a first exemplary embodiment of the isolation module IM. The isolation module comprises two ferromagnetic core-pieces 121, 123 that are electrically isolated from each other. The core-pieces 121, 123 may have a toroidal, oval or other shape forming a closed magnetic circuit and may be made of an ungapped core-piece or may be formed of several core-pieces of the U and/or I type. The isolation module comprises an input magnetic circuit MC1 comprising the input core-piece 121 on which an input 111 winding is wound. Furthermore, the isolation module comprises an output magnetic circuit comprising an output core-piece 123 on which an output winding 113 is wound. The input magnetic circuit MC1 is coupled with an output magnetic circuit MC2 by means of a coupling winding 112. The components of the isolation module IM are selected so that the coupling coefficient k between the input winding 111 and the output winding 113 is less than 0.75. For circuits, wherein the secondary and primary circuits are resonantly coupled, the coupling coefficient k should be preferably less than 0.4. Such value of the coupling coefficient k can be achieved by utilizing a sufficiently high magnetic field leakage between the windings 111 and 113, for example by using magnetic cores with relatively low magnetic permeability, e.g. µ<10, and/or by means of an appropriately wound coupling winding 112, for example as a loop with a relatively high leakage, so that the loop area is at least 10 times larger than the core cross-sectional area.

It is important that the distances: d1 (between the input winding 111 and the coupling winding 112), d2 and d3 (between the coupling winding 112 and the input core-piece 121), d4 and d5 (between the coupling winding 112 and the output core-piece 123), and d6 (between the coupling winding 112 and the output winding 113) are not smaller than the isolation distance for the operating conditions of the converter, and compliant with applicable standards, such as IEC 60950-1 (e.g. : :2005+AMD1:2009+AMD2:2013 CSV Consolidated version), IEC 60079-11 (e.g. :2011, Edition 6.0), IEC 60601-1 (e.g. :2015, Edition 1.0), IEC 61010-1 (e.g. :2010, Edition 3.0).

In the exemplary embodiment of the invention as shown in the drawing, the coupling winding 112 has an 8-like form, i.e. it forms one turn surrounding the input core-piece 121 and one turn surrounding the output core-piece 123. It is also possible to use coupling windings 112 having a plurality of turns, wherein the number of turns surrounding the core-piece 121 of the input circuit MC1 may be different from the number of turns surrounding the core-piece 123 of the output circuit MC2, depending on the desired characteristic of the isolation module.

The input core-piece 121 may be identical with the output core-piece 123, or they may differ in certain parameters, such as the core material, the core-piece dimensions, shape etc., depending on the desired characteristic of the isolation module.

The input winding 111 may be identical with the output winding 113 or they may differ in certain parameters, such as the number of turns, the manner in which the turns are wound etc., depending on the desired characteristic of the isolation module.

Fig. 2 shows a second exemplary embodiment of the isolation module IM. This module differs from the module of Fig. 1 in that instead of the closed input core-piece 121 in the input circuit MC1 it has a gapped core-piece 131 with a gap G. The gap G may by an air gap or may be filled with a nonmagnetic material. The gap G may be either a lumped gap, as shown in the drawing, or a distributed gap. The gap G in the input core-piece 131 enables to utilize the entire isolation module IM in resonant energy conversion systems, where the whole component functions as a resonant inductor and a transformer. Furthermore, the use of a gap filled with a nonmagnetic material allows reduction of core losses.

Fig. 3 shows a third exemplary embodiment of the isolation module IM. This module differs from the module of Fig. 1 in that instead of the closed output core-piece 123 in the output circuit MC2 it has a gapped core-piece 133. The gap G may be either an air gap or may be filled with a nonmagnetic material. The gap G may by a lumped gap, as shown in the drawing, or a distributed gap. The advantages of application of the gap G in the output core-piece 123 are equivalent to those mentioned in the description of the second embodiment shown in Fig. 2.

Fig. 4 shows a fourth exemplary embodiment of the isolation module IM. This module differs from the module of Fig. 1 in that instead of the closed input core-piece 121 and the closed output core-piece 123 it has a gapped input core-piece 131 and a gapped output core-piece 133 with a gap G. The gap G may be either an air gap or may be filled with a nonmagnetic material. The gap G may be a lumped gap, as shown in the drawing, or a distributed gap. The gaps G in both core-pieces 131, 133 may have the same parameters, or different parameters, depending on the desired characteristic of the isolation module. The use of the gaps G enables achieving combined advantages of the isolation module as described for both exemplary embodiments shown in Fig. 2 and Fig. 3. That type of isolation module is particularly preferable for application to resonant circuits where it is desired to use loosely coupled isolation modules, in which the magnetic coupling coefficient k between the input and output should be less than 0.4, as opposed to tightly coupled circuits in which the coupling coefficient k is close to unity. In such solutions, a resonant capacitor is preferably connected at the secondary side of the isolation module, i.e. at the output winding of the MC2 core-piece, in order to form resonant coupling between the primary and secondary side resonant circuits.

Resonant coupling occurs when natural frequencies of two components/circuits are close to each other. That coupling is characterised in that resonant circuits at the primary and secondary sides are tuned to equal or only slightly different frequencies. In an analogous manner, resonant capacitors may be incorporated into the other isolation modules shown in Figs. 1-3 and Figs. 5-8.

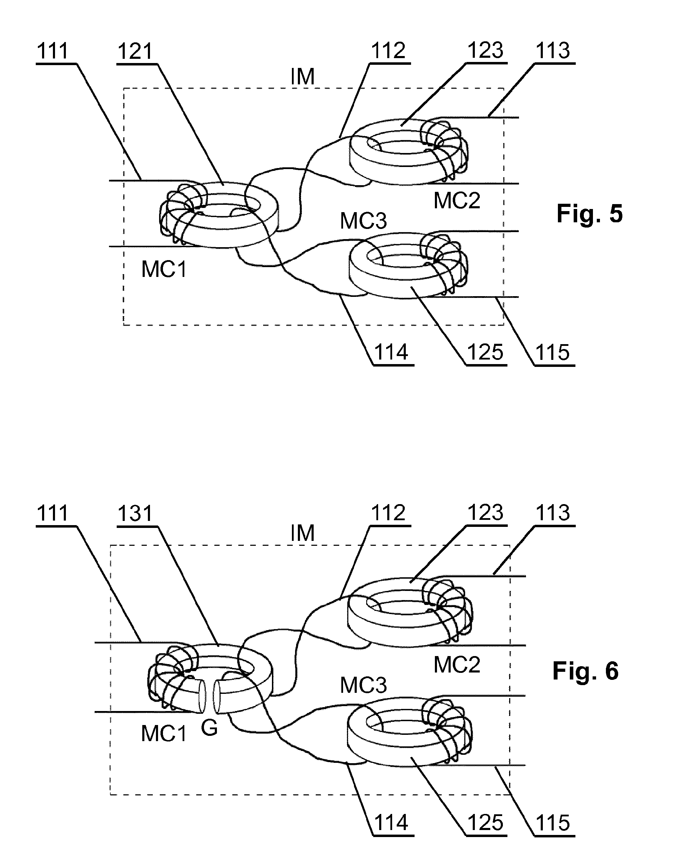

Fig. 5 shows a fifth exemplary embodiment of the isolation module IM. This module differs from the module of Fig. 1 in that it has a second output magnetic circuit MC2, comprising a second output core-piece 125 on which an output winding 115 is wound. The second output magnetic circuit MC2 is coupled with the input magnetic circuit MC1 by means of a second coupling winding 114.

For all of the output windings, the condition of coupling with the input winding should be fulfilled as described in the exemplary embodiment of Fig. 1, i.e. the coupling coefficient k between the input winding 111 and each output winding should be less than 0.75.

The second output core-piece 125 may have parameters identical to those of the first output core-piece 123 or different parameters. The second output winding 125 may have parameters identical to those of the first output winding 123 or different parameters. Furthermore, the second coupling winding 114 may have the same parameters as the first coupling winding 112 or different parameters, depending on the desired characteristic of the isolation module.

Fig. 6 shows a sixth exemplary embodiment of the isolation module IM. This module differs from the module of Fig. 5 in that instead of the closed input core-piece 121 in its input circuit MC1 it has a gapped core-piece 131 with a gap G, similarly to the second exemplary embodiment shown in Fig. 2. The advantages of application of the gap G in the output core-piece 131 are similar to those mentioned in description of the second exemplary embodiment shown in Fig. 2.

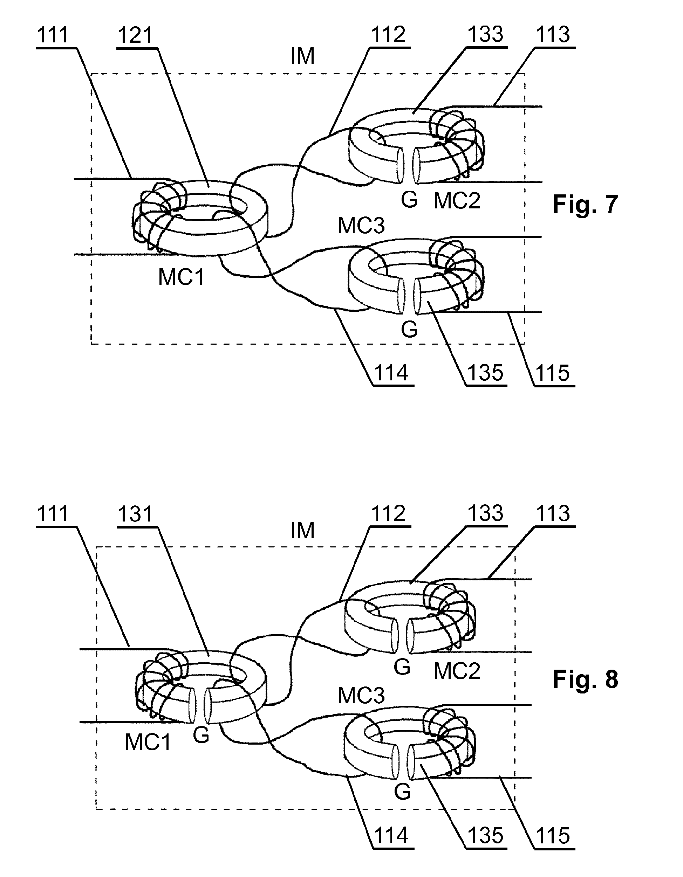

Fig. 7 shows a seventh exemplary embodiment of the isolation module IM. This module differs from the module of Fig. 5 in that instead of the closed output core-pieces 123, 125 it has gapped core-pieces 133, 135 with a gap G in output circuits MC2, MC3, similarly to the exemplary embodiment in Fig. 3. The advantages of application of gaps G in the output core-pieces 133, 135 are analogous to those mentioned in description of the exemplary embodiment shown in Fig. 3.

Fig. 8 shows an eighth exemplary embodiment of the isolation module IM. This module differs from the module of Fig. 5 in that instead of the closed input core-piece 121 and the closed output core-pieces 123, 125 it has a gapped input core-piece 131 and gapped output core-pieces 133, 135 with a gap G, similarly to the exemplary embodiment of Fig. 4. The gaps G in the core-pieces 131, 133, 135 may have the same parameters or different parameters, depending on the desired characteristic of the isolation module. The use of gaps G enables achieving combined advantages of the isolation module discussed for both exemplary embodiments according to Fig. 6 and Fig. 7.

There are also possible other exemplary embodiments, depending on the desired characteristic of the isolation module, for example:
- application of a closed core-piece in one output magnetic circuit MC2 and a gapped core-piece with a gap G in another output magnetic circuit MC3;
- application of more than two output magnetic circuits.

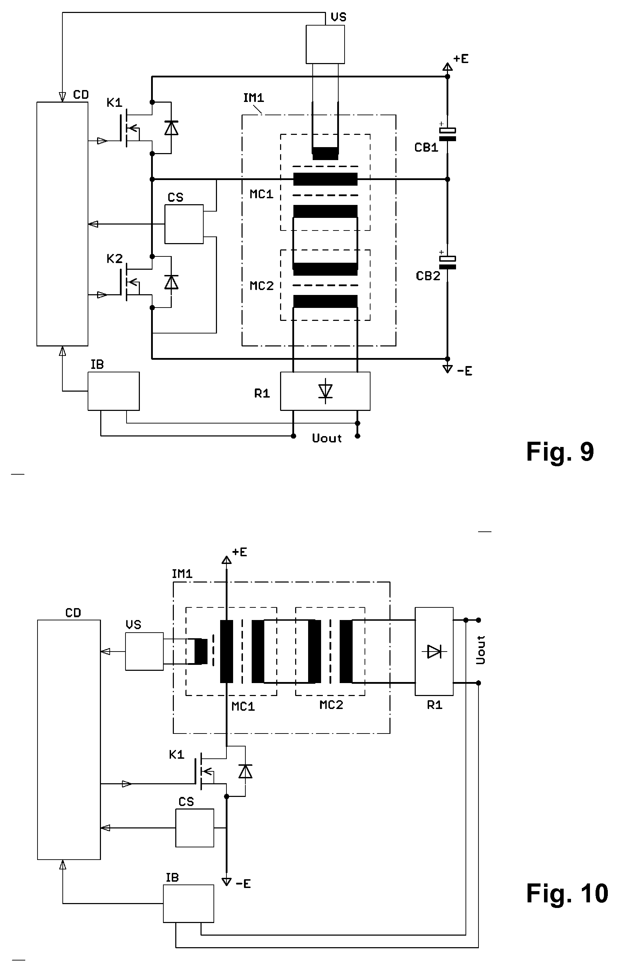

The isolation module is particularly applicable to DC-DC converters, whose exemplary embodiments are shown in Fig. 9-15. Such converters are intended for conversion of an input DC voltage (+E; -E) into a DC output voltage (Uout). These converters comprise an inverter for conversion of the input DC voltage (+E; -E) into an alternating voltage, which is shaped by a shaping circuit (a transformer, a resonant circuit etc.). The shaped alternating voltage is rectified by a rectifying circuit into the DC output voltage (Uout). In these converters, the isolation module is utilized in such a manner that the shaped alternating voltage from the inverter is applied to its input winding 111, wherein the output winding 113 is, either directly or indirectly, connected to a rectifying circuit.

Fig. 9 shows a first exemplary embodiment of a single-output isolated converter as a half-bridge push-pull converter with a single isolation module. Any of the isolation modules shown in Figs. 1-4 may be used in the converter, but the use of the isolation module shown in Fig. 1 is particularly preferable. The preferred control method is a classic current-mode PWM control.

The converter comprises an assembly of transistor switches K1, K2 arranged in a half-bridge configuration connected to supply voltage source terminals +E and -E. In the half-bridge diagonal there is connected the isolation module IM1 incorporating the input magnetic circuit MC1 and the magnetic circuit MC2 by means of which the load is connected, through a rectifier R, to the converter and blocking capacitors CB1, CB2 protecting the converter against undesired direct current flow. The converter further comprises a controller CD for stabilizing voltages or currents by controlling the switches K1, K2, preferably by varying the duty cycle of control signals, utilizing signals from a galvanic isolation block IB, a current sensor CS and/or a voltage sensor VS, or any combination of these signals. The isolation module IM1 ensures a high insulation level, high resistance to dielectric breakdown voltage and small coupling capacitances between the input and respective outputs, as well as between these outputs. The current sensor CS ensures that the converter is protected from overloads and proof to short-circuit. It generates signals for the controller CD and enables an appropriate reaction in the event of improper operation of the converter, e.g. a reaction to excessive current in the transistor switches K1 and K2 and/or in the isolation module IM1 main circuit. Furthermore, the stabilization of output currents is possible owing to signals from the galvanic isolation block IB which transfers information across the isolation barrier from the converter output to the controller CD. Where a precise stabilization of output voltages or currents is not required, and also in order to reduce the cost of the expensive galvanic isolation block IB, the stabilization of output voltages may also be achieved by means of the voltage sensor VS connected to an additional measuring winding wound on the output magnetic circuit MC1. Such a solution enables the stabilization of output voltages or currents, preferably by monitoring currents and/or voltages at the primary side of the isolation module IM1 in order to fulfil the requirements for high insulation level, high resistance to dielectric breakdown voltage and also ensures small coupling capacitances between the input and respective outputs and between these outputs.

Fig. 10 shows a second exemplary embodiment of the single-output isolated converter as a flyback converter with a single isolation module. Any of the isolation modules shown in Figs. 1-4 may be used in the converter, but the use of the isolation module shown in Fig. 2 is particularly preferred. The preferred control method is a classic current-mode PWM control.

The converter comprises the transistor switch K1, whereof one side is connected to the supply voltage source terminal -E and the other side is connected to the isolation module IM1 incorporating the input magnetic circuit MC1 whereof part is the output magnetic circuit MC2 by means of which the load is connected, through the rectifier R, to the converter. The other side of the isolation module MI1 is connected to the supply voltage source terminal +E. The converter comprises a controller CD stabilizing voltages or currents by means of controlling the switch K1 preferably, by varying the duty cycle of control signals, utilizing signals from the galvanic isolation block IB, the current sensor CS and/or voltage sensor VS, or any combination of these signals. The isolation module IM1 ensures a high insulation level, high resistance to dielectric breakdown voltage and small coupling capacitances between the input and respective outputs and also between these outputs. The current sensor CS ensures the converter is overload protected and short-circuit proof. It generates signals for the controller CD and enables an appropriate reaction in the event of the converter improper operation, e.g. a reaction to excessive current in the transistor switch. Furthermore, the stabilization of output currents is possible owing to signals from the galvanic isolation block IB which transfers information from the converter output to the controller CD. Where a precise stabilization of output voltages or currents is not required, and also in order to reduce the cost of the expensive galvanic isolation block IB, the stabilization of output voltages may also be achieved by means of the voltage sensor VS connected to the additional measuring winding wound on the output magnetic circuit MC1. Such a solution enables the stabilization of output voltages or currents preferably by monitoring currents and/or voltages at the isolation module IM1 primary side in order to fulfil the requirements for high insulation level, high resistance to dielectric breakdown voltage and also small coupling capacitances between the input and respective outputs and as well as between these outputs.

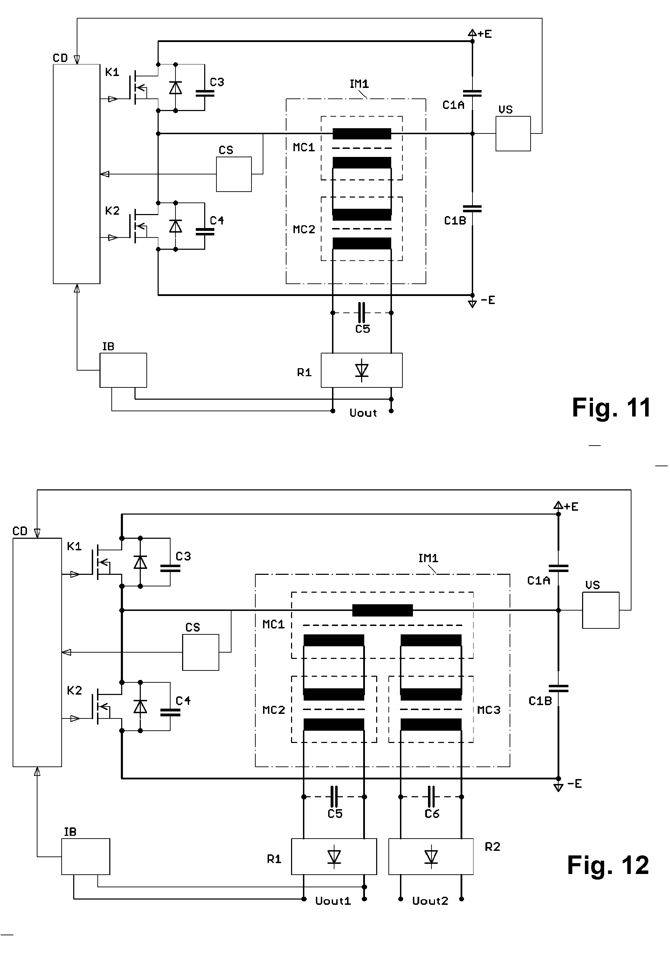

Fig. 11 shows a third exemplary embodiment of the single-output isolated converter as a half-bridge push-pull converter with a single isolation module. Any of the isolation modules shown in Figs. 1-4 may be used in the converter, but the use of the isolation module shown in Figs. 1, 2 or 3, without the resonant capacitor C5, is particularly preferred. If the isolation module is constructed in such a manner that the magnetic coupling coefficient k between the input and output is less than 0.4, i.e. the circuit is loosely coupled, then preferably the isolation module from Fig. 4 with the resonant capacitor C5 should be used in order to form a resonant coupling between the primary and secondary side resonant circuits. The preferred control method is a classic frequency modulation technique. The converter comprises an assembly of transistor switches K1, K2 arranged in a half-bridge configuration connected to supply voltage source terminals +E and -E. Preferably, to each of transistor switches K1 and K2 there are connected in parallel capacitors C3 and C4, that means the system operates in class DE. In the half-bridge diagonal there is connected a series resonant circuit comprising an inductive reactance element comprising the isolation module IM1 with the input magnetic circuit MC1 and the output magnetic circuit MC2, by means of which the load is connected, through a rectifier R, to the converter to which are also connected in parallel capacitive elements in the form of capacitors C1A and C1 B. The converter further comprises a controller CD for stabilizing voltages or currents by controlling the switches K1, K2, preferably by varying the frequency of control signals, utilizing signals from a galvanic isolation block IB, a current sensor CS and/or a voltage sensor VS, or any combination of these signals. The isolation module IM1 ensures a high insulation level, high resistance to dielectric breakdown voltage and small coupling capacitances between the input and respective outputs and also between these outputs. The current sensor CS ensures the converter is protected from overload and proof to short-circuit. It generates signals for the controller CD and enables an appropriate reaction in the event of the converter improper operation, e.g. the occurrence of an excessive current in transistor switches K1 and K2 and/or in the resonant circuit. Furthermore, the stabilization of output currents is possible owing to signals from the galvanic isolation block IB which transfers information across the isolation barrier from the converter output to the controller CD. Where a precise stabilization of output voltages or currents is not required, in order to limit the cost of the expensive galvanic isolation block IB, the stabilization of output voltages may also be achieved by means of the voltage sensor VS connected to an additional measuring winding wound on the output magnetic circuit MC1 or to the node of connection of capacitors C1A and C1 B. Such a solution enables the stabilization of output voltages or currents, preferably by monitoring currents and/or voltages at the isolation module IM1 primary side in order to fulfil the requirements for high insulation level, high resistance to dielectric breakdown voltage and also small coupling capacitances between the input and respective outputs and between these outputs.

Fig. 12 shows a first exemplary embodiment of the multiple-output isolated converter as a half-bridge resonant converter with a single, multiple-output isolation module. Any of the isolation modules shown in Figs. 5-8 may be used in the converter, but the use of the isolation modules shown in Fig. 5, 6 or 7, without the resonant capacitors C5 and C6, is particularly preferred. If the isolation module is constructed in such a manner that the magnetic coupling coefficient k between the input and output is less than 0.4, i.e. the circuit is loosely coupled, then preferably the isolation module from Fig. 8 with the resonant capacitors C5 and C6 should be used in order to form a resonant coupling between the primary and secondary side resonant circuits. The preferred control method is a classic frequency modulation technique. The converter comprises an assembly of transistor switches K1, K2 arranged in a half-bridge configuration and connected to supply voltage source terminals +E and -E. Preferably, to each of transistor switches K1 and K2 there are connected in parallel capacitors C3 and C4, that means the system operates in class DE. In the bridge diagonal there is connected a series resonant circuit comprising an inductive reactance element comprising the isolation module IM1 whereof parts are the input magnetic circuit MC1 and output magnetic circuits MC2 and MC3, by means of which, through rectifiers R1 and R2, loads are connected to the converter, to which there are also connected capacitive elements in the form capacitors C1A and C1 B connected in parallel. The converter further comprises a controller CD for stabilizing voltages or currents by controlling the switches K1, K2, preferably by varying frequency of control signals, utilizing signals from a galvanic isolation block IB, a current sensor CS and/or a voltage sensor VS, or any combination of these signals. The isolation module IM1 ensures a high insulation level, high resistance to dielectric breakdown voltage and small coupling capacitances between the input and respective outputs and also between these outputs. The current sensor CS ensures the converter is protected from overload and proof to short-circuit. It generates signals for the controller CD and enables an appropriate reaction in the event of the converter improper operation, e.g. a reaction to excessive current in transistor switches K1 and K2 and/or in the resonant circuit. Furthermore, the stabilization of output currents is possible owing to signals from the galvanic isolation block IB which transfers information across the isolation barrier from the converter output to the controller CD. Where a precise stabilization of output voltages or currents is not required, and also in order to reduce the cost of the expensive galvanic isolation block IB, the stabilization of output voltages may also be achieved by means of the voltage sensor VS connected to an additional measuring winding wound on the input magnetic circuit MC1 or to the node of connection of capacitors C1A and C1 B. Such a solution enables the stabilization of output voltages or currents, preferably by monitoring currents and/or voltages at the isolation module IM1 primary side in order to fulfil the requirements for high insulation level, high resistance to dielectric breakdown voltages and also small coupling capacitances between the input and respective outputs as well as between these outputs.

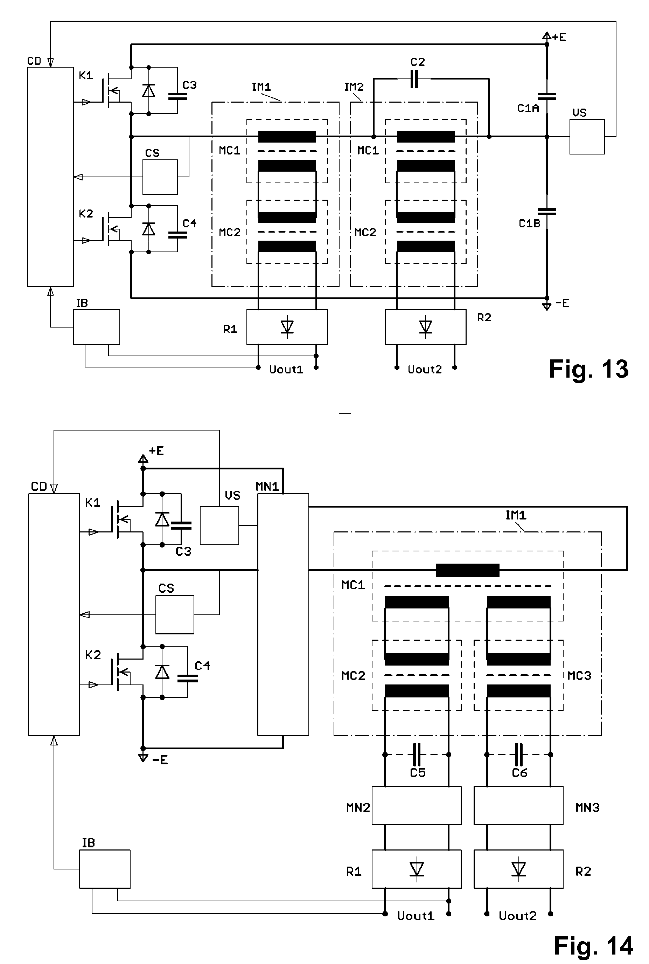

Fig. 13 shows a second exemplary embodiment of the multiple-output isolated converter as a half-bridge resonant converter with two isolation modules IM1 and IM2. Any of the isolation modules shown in Figs. 1-4 may be used in the converter, but the use of the isolation modules shown in Figs. 1, 2 or 3 is particularly preferred. The preferred control method is a classic frequency modulation technique. The converter comprises an assembly of transistor switches K1, K2 arranged in a half-bridge configuration and connected to supply voltage source terminals +E and -E. Preferably, to each of the transistor switches K1 and K2 there are connected in parallel capacitors C3 and C4, that means the system operates in class DE. In the half-bridge diagonal there is connected a series-parallel resonant circuit comprising an inductive reactance element, comprising the isolation module IM1, by means of which the load is connected, through the rectifier R1, to the converter, and a capacitive element in the form of capacitors C1A and C1 B connected in parallel, and of a parallel resonant circuit comprising an inductive reactance element comprising the isolation module IM2 by means of which the load is connected, through the rectifier R2, to the converter and a capacitive element in the form of capacitor C2. The converter further comprises a controller CD for stabilizing voltages or currents by controlling the switches K1, K2, preferably by varying the frequency of control signals, utilizing signals from a galvanic isolation block IB, a current sensor CS and/or a voltage sensor VS, or any combination of these signals. Isolation modules IM1 and IM2 ensure a high insulation level, high resistance to dielectric breakdown voltage and small coupling capacitances between the input and respective outputs and also between these outputs. The current sensor CS ensures the converter is protected from overload protected and proof to short-circuit. It generates signals for the controller CD and enables an appropriate reaction in the event of the converter improper operation, e.g. a reaction to excessive current in transistor switches K1 and K2 and/or in the resonant circuit. Furthermore, the stabilization of output currents is possible owing to signals from the galvanic isolation block IB which transfers information across the isolation barrier from the converter output to the controller CD. Where a precise stabilization of output voltages or currents is not required, and also in order to reduce the cost of the expensive galvanic isolation block IB, the stabilization of output voltages may also be achieved by means of the voltage sensor VS connected to an additional measuring winding wound on the input magnetic circuit MC1 or MC2 or to the node of connection of capacitors C1A and C1B, or the current sensor CS. Such a solution enables the stabilization of output voltages or currents preferably by monitoring currents and/or voltages at the isolation module IM1 primary side in order to fulfil the requirements for high insulation level, high resistance to dielectric breakdown voltage and also small coupling capacitances between the input and respective outputs as well as between these outputs.

Fig. 14 shows a fourth exemplary embodiment of the multiple-output isolated converter whose working principle is similar to that of the converter shown in Fig. 12 and an important difference consists in that it is adapted to operation at high frequencies and its configuration is supplemented with impedance matching networks MN1, MN2, MN3, necessary for high-efficiency power transfer in systems operated at frequencies above one megahertz. The impedance matching network MN1 matches a single, multiple-output isolation module IM1 to the inverter comprising the transistor switches K1, K2 connected in the half-bridge configuration, wherein the impedance matching networks MN2 and MN3 match respective outputs of the isolation module IM1 to loads.

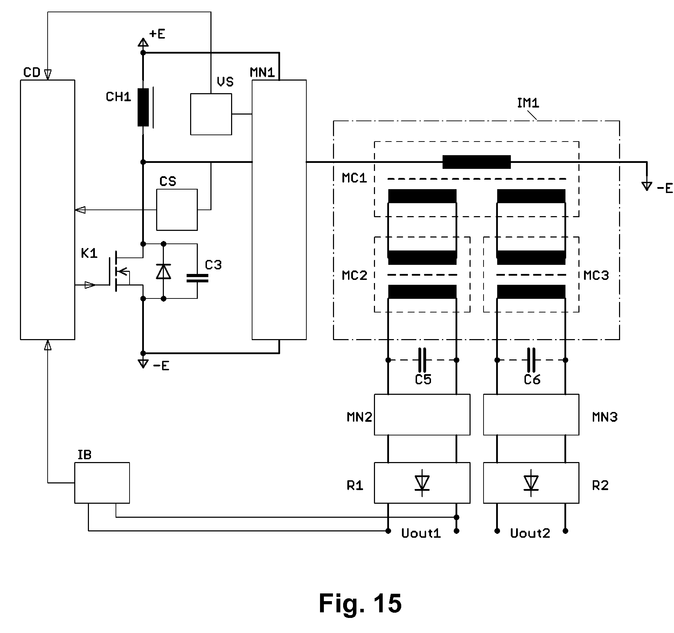

Fig. 15 shows a fifth exemplary embodiment of the multiple-output isolated converter whose working principle is similar to that of the converter shown in Fig. 14, and the difference is related to the use of a circuit comprising an inductor CH1 and the transistor switch K1 operating in class E, instead of the inverter comprising the transistor switches K1, K2 arranged in the half-bridge configuration and operating in class DE.

## Claims

1. An isolated DC-DC converter configured to convert a DC input voltage into a DC output voltage, comprising an inverter configured to convert the DC input voltage into an alternating voltage, a shaping circuit configured to shape the alternating voltage and a rectifying circuit configured to rectify the shaped alternating voltage into the DC output voltage, **characterized in that** the shaping circuit comprises an isolation module (IM), the isolation module (IM) comprising:
- a magnetic input circuit (MC1) comprising an input ferromagnetic core-piece (121, 131) on which there is wound an input winding (111) connected to the shaped alternating voltage;
- a magnetic output circuit (MC2) comprising an output ferromagnetic core-piece (123, 133) on which there is wound an output winding (113) connected to the rectifying circuit, wherein the output ferromagnetic core-piece (123, 133) is electrically isolated from the input ferromagnetic core-piece (121, 131);
- wherein the magnetic input circuit (MC1) is coupled with the magnetic output circuit (MC2) by a coupling winding (112) wound on the input ferromagnetic core-piece (121, 131) and on the output ferromagnetic core-piece (123, 133), wherein the distances (d1-d6) between the coupling winding (112) and the input winding (111), input ferromagnetic core-piece (121, 131), the output ferromagnetic core-piece (123, 133) and the output winding (113) are not smaller than the isolation distance; and
- wherein the coefficient of coupling k between the input winding (111) and the output winding (113) is less than 0.75.

2. The converter according to claim 1, **characterized in that** the isolation module (IM) further comprises at least one additional output magnetic circuit (MC3) comprising an additional ferromagnetic core piece (125, 135) on which there is wound an additional output winding (115), connected to additional output terminals (Uout2) of the converter, wherein the additional ferromagnetic core piece (125, 135) is electrically isolated from the input core-piece (121, 131), and wherein the input magnetic circuit (MC1) is coupled with the additional output magnetic circuit (MC3) by means of an additional coupling winding (114) which is wound on the additional input ferromagnetic core-piece (121, 131) and on the output magnetic core-piece (125, 135), wherein the distances (d1-d6) between the additional coupling winding (114) and the input winding (111), the input ferromagnetic core-piece (121, 131), the additional output ferromagnetic core-piece (125, 135) and the additional output winding (115) are not smaller than the isolation distance.

3. The converter according to claim 1, **characterized in that** it is a multiple-output converter comprising at least one additional isolation module (IM2) connected in series with the first isolation module (IM1).

4. The converter according to any of claims 1-3, **characterized in that** the input ferromagnetic core-piece (131) and/or at least one output ferromagnetic core-piece (133, 135) comprises a gap (G).

5. The converter according to any of claims 1-4, **characterized in that** the coupling coefficient k between the input winding (111) and the output winding (113) is less than 0.4.

6. The converter according to claim 5, **characterized in that** a resonant capacitor (C5) is connected in parallel to the output winding (113).

7. The converter according to any of claims 1-6, **characterized in that** it is a push-pull type converter wherein the isolation module (IM1) is connected in a diagonal of a half-bridge comprising a pair of transistor switches (K1, K2) connected to gate driver outputs of a controller (CD).

8. The converter according to any of claims 1-6, **characterized in that** it is a flyback converter wherein one input of the isolation module (IM1) is connected to one of the input voltage terminals and the other input of the isolation module (IM1) is connected through a transistor switch (K1) to another terminal of the input voltage, wherein the transistor switch (K1) is connected to a controller (CD) gate driver output.

9. The converter according to any of claims 1-6, **characterized in that** it is a half-bridge resonant converter, wherein the isolation module (IM1) is an inductive reactance element of a series resonant circuit comprising capacitors (C1A) and (C1B) as capacitive elements, wherein the isolation module (IM1) is connected in the diagonal of a half-bridge comprising a pair of transistor switches (K1, K2), and wherein the converter further comprises a controller (CD) having gate driver outputs connected to transistor switches (K1, K2).

10. The converter according to any of claims 3-6, **characterized in that** it is a half-bridge resonant converter with a series-parallel resonant circuit, wherein in the diagonal of a half-bridge comprising a pair of transistor switches (K1, K2) there is connected the first isolation module (IM1) being a series inductive reactance element of a series-parallel resonant circuit comprising capacitors (C1A) and (C1 B) as capacitive elements, wherein the additional isolation module (IM2) is connected in series with the first isolation module (IM1), forming an inductive reactance element of a parallel resonant circuit comprising a capacitor (C2) as a capacitive element, and wherein the converter further comprises a controller (CD) having gate driver outputs connected to transistor switches (K1, K2).

11. The converter according to any of claims 2-6, **characterized in that** it is a half-bridge resonant converter, wherein an impedance matching network (MN1) for matching the isolation module (IM1) is connected to an inverter, comprising an assembly of transistor switches (K1, K2), and to an isolation module (IM1), wherein the isolation module (IM1) outputs are connected to additional impedance matching networks (MN2, MN3), which are configured to match the isolation module (IM1) outputs to loads, and wherein the converter comprises a controller (CD) having gate driver outputs connected to transistor switches (K1, K2).

12. The converter according to any of claims 2-6, **characterized in that** it is a resonant converter, wherein an impedance matching network (MN1) for matching the isolation module (IM1) is connected to a class E inverter comprising a transistor switch (K1), an inductor (CH1) and a capacitive element (C3) and to the isolation module (IM1), wherein the isolation module (IM1) outputs are connected to additional impedance matching networks (MN2, MN3), which are configured to match the isolation module (IM1) outputs to load, wherein the converter comprises a controller (CD) having a gate driver output connected the transistor switch (K1).
